# EUROPÄISCHE PATENTANMELDUNG

(11) **EP 0 774 650 A1**
(43) Veröffentlichungstag der Anmeldung: **21.05.1997**
(21) Anmeldenummer: 96115253.5
(22) Anmeldetag: 24.09.1996
(51) Int. Cl.: G01K 7/18

(54) **Temperatur-Sensor**

(30) Priorität: 15.11.1995 DE 19542516
(71) Anmelder: Heraeus Sensor GmbH, D-63450 Hanau (DE)
(72) Erfinder: Wienand, Karlheinz, Dr., 63741 Aschaffenburg (DE); Englert, Werner, 63755 Alzenau (DE); Dietmann, Stefan, 72221 Haiterbach (DE); Sander, Margit, 63971 Karlstein (DE)
(74) Vertreter: Kühn, Hans-Christian

(57) **Zusammenfassung**

Bei einem Temperatursensor mit einem in einem rohrförmigen Gehäuse untergebrachten Platinwiderstandsthermometer soll die zugehörige Platinwiderstandsschicht gegen Vergiftung, bzw. Kontaminierung des Platins geschützt werden, da das elektrochemische Verhalten von Platin bei zu geringem Sauerpartialdruck zur Reduktion von Umgebungsstoffen führen kann; hierzu ist im Anschlußbereich des rohrförmigen Gehäuses eine mechanisch feste und flüssigkeitsdichte Verbindung vorgesehen, die einen Zutritt von Luftsauerstoff aus der Umgebung des Anschlußkabels in das Gehäuse ermöglicht; der Luftsauerstoffzutritt wird durch eine flüssigkeitsdichte, sauerstoffpermeable Ummantelung des zugehörigen Anschlußkabels ermöglicht, bzw. über einen zugehörigen Anschlußstecker, wobei der Zutritt von Luftsauerstoff entlang eines parallel zu den elektrischen Leitungen geführten Glasseidenbeilaufs innerhalb der Ummantelung des Anschlußkabels erfolgt.

## Beschreibung

Die Erfindung betrifft einen Temperatur-Sensor mit einem Platin enthaltenden temperaturabhängigen Meßwiderstand in einem mit einer Anschlußleitung verbundenen Gehäuse, wobei die Oberfläche des Meßwiderstandes gegenüber der Umgebungsatmosphäre durch eine sauerstoffdurchlässige Diffusionsbarriere abgedeckt ist, und der Meßwiderstand über wenigstens ein Kontaktfeld mit wenigstens einer Anschlußleitung verbunden ist.

Aus der EP 0 327 535 B1 ist ein Temperatursensor mit einem Platinwiderstandsthermometer bekannt, wobei die Platinwiderstandsschicht durch eine Schutzschicht abgedeckt ist, die aus einer dielektrischen Schicht und einer Diffusionssperrschicht besteht. Durch einen solchen Aufbau soll eine Vergiftung bzw. Kontaminierung des Platins als Meßelement verhindert werden, da das elektrochemische Verhalten des Platins bei zu geringem Sauerstoffpartialdruck zur Reduktion von Umgebungsstoffen führt.

Als problematisch erweist sich bei einem solchen Widerstandsthermometer die Befestigung innerhalb eines Schutzgehäuses, wobei es in der Praxis durch mangelnde Vibrations- und Stoßfestigkeit zu einer vorzeitigen Zerstörung kommen kann.

Aufgabe der Erfindung ist es, einen robusten Temperatur-Sensor zu schaffen, bei dem das Temperaturmeßelement innerhalb seines Gehäuses stabil angeordnet ist, um langzeitstabile Messungen im Temperaturbereich bis zu 1000° C zu gewährleisten; weiterhin soll eine ausreichende Diffusion von atmosphärischem Sauerstoff in den Innenraum des Gehäuses sichergestellt sein, um Platinvergiftung aufgrund eines zu geringen Sauerstoffpartialdrucks in der Umgebung des Meßelements zu vermeiden.

Die Aufgabe wird erfindungsgemäß durch die kennzeichnenden Merkmale des Anspruchs 1 gelöst.

Als besonders vorteilhaft erweist es sich, daß das Gehäuse in bestehenden Anlagen einsetzbar ist und beispielsweise zur Messung der Katalysatortemperatur bei Abgas-Systemen für Kraftfahrzeuge verwendet werden kann.

In einer vorteilhaften Ausgestaltung ist ein Glas-Seiden-Beilauf innerhalb des Anschlußkabels vorgesehen, der einen Sauerstoffzutritt vom Steckerbereich des Anschlußkabels bis zum Anschlußbereich des Anschlußkabels ermöglicht.

Als besonders vorteilhaft erweist sich hierbei die hohe Stabilität im Bereich zwischen Gehäuse und Anschlußkabel durch zwei umlaufende Rollsicken des Gehäuses.

Weitere vorteilhafte Ausgestaltungen des Gegenstandes der Erfindung sind in den Ansprüchen 2 bis 8 angegeben.

Als besonders vorteilhaft erweist sich die einfache und preiswerte Aufbereitung der Signale in der sich daran anschließenden Auswerteschaltung. Darüberhinaus ist die relativ hohe Signalspannung im Voltbereich im Verhältnis zu Signalen von Thermoelementen weitgehend störunempfindlich.

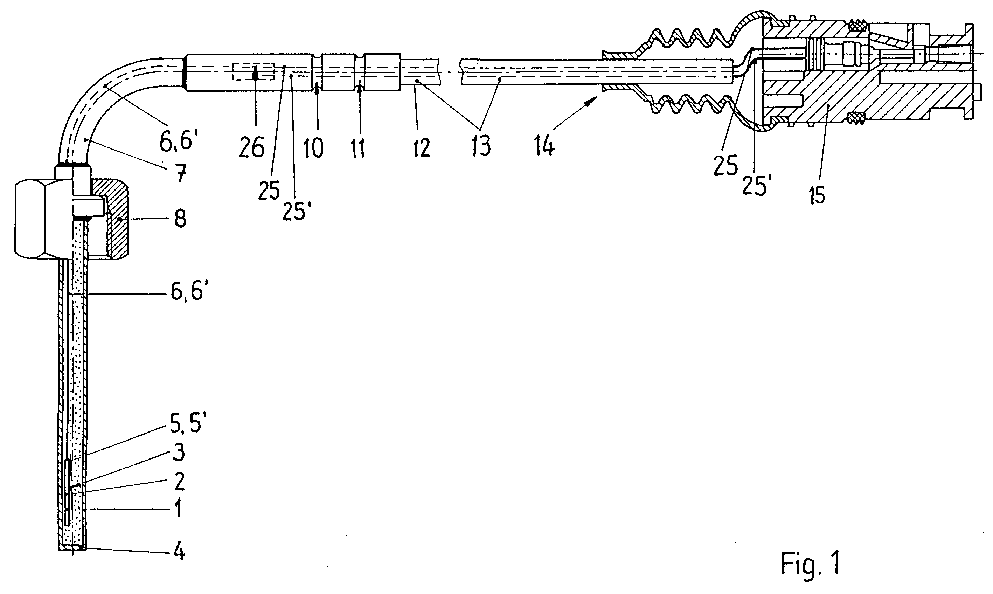

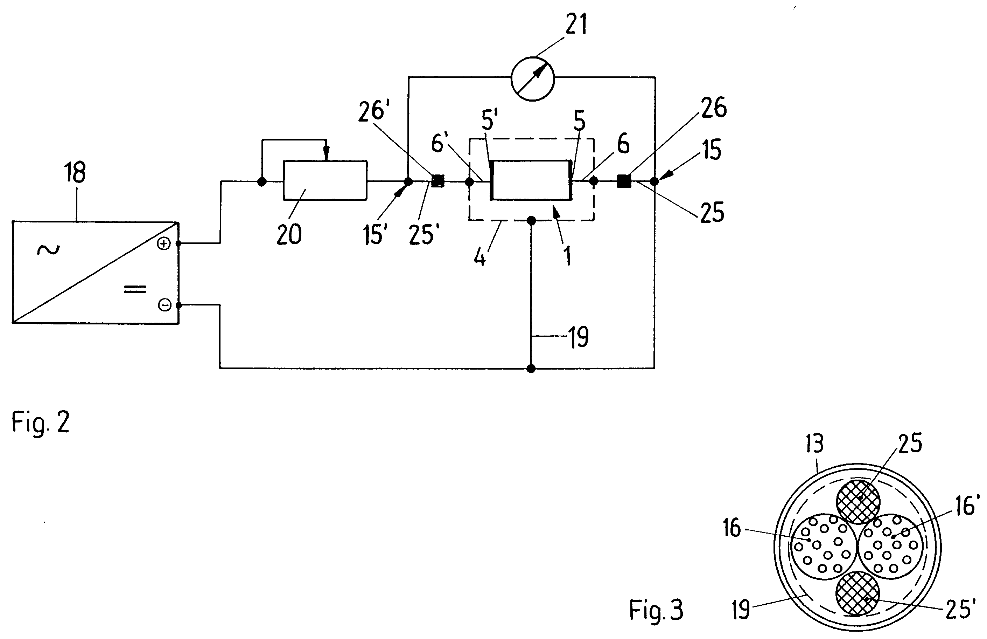

Im folgenden ist der Gegenstand der Erfindung anhand der Figuren 1 und 2 näher erläutert.
Figur 1 zeigt schematisch ein Einschraubwiderstandsthermometer teilweise im Längsschnitt aufgebrochen;
Figur 2 zeigt eine Schaltungsanordnung zum Betrieb des Temperaturmeßelements.
Figur 3 zeigt den Zuleitungskabelquerschnitt mit Glas-Seiden-Beilauf.

Gemäß Figur 1 besteht das temperaturabhängige Widerstandselement 1 aus einem elektrisch isolierenden Substrat 2, auf dem die Widerstandsschicht 3 als Dünnschicht bzw. als Film aufgetragen ist. Das Widerstandselement 1 ist durch formschlüssige Arretierung mittels keramischer Vergußmasse im Endbereich eines rohrförmigen Gehäuses 4 aus einer Nickel-Legierung gehalten, das aus einem einseitig geschlossenen Rohrabschnitt besteht.

Ein solcher Meßwiderstand ist beispielsweise aus der EP 0 471 138 B1 bekannt, bei dem das Substrat aus einer Keramik, vorzugsweise aus Aluminiumoxid besteht, während der Platindünnfilm in Form eines Mäanders aufgebracht ist und über Kontaktfelder 5, 5' mit Anschlußleitung 6, 6' aus hochtemperaturbeständigem Werkstoff verbunden ist; die Anschlußleitung 6, 6' befindet sich in einem hochtemperaturbeständigen Schutzrohr 7 aus einer Nickel-Legierung, welches über eine Schraubverbindung 8 mit dem ebenfalls aus hochtemperaturbeständigem Werkstoff bestehenden Gehäuse 4 zur Aufnahme des Widerstandselements 1 verbunden ist. Die Anschlußleitung 6. 6' ist im Verbindungsbereich 26 bzw. im Bereich von zwei axial zueinander benachbarten Rollsicken 10, 11 mit den Leitern 25, 25' eines Anschlußkabels 13 verbunden, das eine Silikonummantelung 12 aufweist und außerhalb der Hochtemperaturzone liegt; durch die Rollsicken wird mittels Quetschung auf Ummantelung 12 das Anschlußkabel gehalten. Das Ende 14 des Anschlußkabels 13 ist mit einem Anschlußstecker 15 versehen, von wo aus ein ermitteltes Temperatursignal an eine Auswerteelektronik weitergeleitet wird.

Das Anschlußkabel 13 enthält neben den beiden Anschlußleitungen 25, 25' einen in Längsrichtung des Kabels verlaufenden in Figur 3 näher dargestellten Glas-Seiden-Beilauf 16, 16', der einen in Längsrichtung verlaufenden Luftsauerstoffzutritt bis zum Gehäuse 4 verbessert.

Die Leiter 25, 25' innerhalb des Anschlußkabels 13 bestehen vorzugsweise aus einer Kupferlitze, während die Silikon-Ummantelung 12 eine übliche Porosität aufweist, so daß sie einerseits ohne weiteres als wasserdicht, andererseits jedoch nicht als vakuumdicht zu bezeichnen ist. Aufgrund der Porosität der Silikon-Ummantelung 12 und des offenen Endes im Stecker 15 tritt Luft-Sauerstoff durch Diffusion in das Innere des Anschlußkabels 13 ein und breitet sich entlang der Zwischenräume bzw. des Glas-Seiden-Beilaufs zwischen den als Leiter 25, 25' dienenden Kupferlitzen bis in das Gehäuse 4 des Meßwiderstandes 1 hin aus.

Figur 2 zeigt schematisch eine Meßvorrichtung mit dem erfindungsgemäßen Temperatursensor; Meßwiderstand 1 ist dabei von dem als elektrische Abschirmung wirkenden Gehäuse 4 umgeben, wobei die Kontaktfelder 5, 5' jeweils mit den Adern 6, 6' der Anschlußleitung verbunden sind. Zur besseren Darstellung in der Schaltungsanordnung sind Anschlußstecker 15 und Verbindungsbereich 26 in Verbindungspunkte 15, 15' und 26, 26' aufgeteilt. Die Anschlußleitung 6, 6' ist außerhalb des Hochtemperaturbereiches im Bereich der Verbindungspunkte 26, 26' mit den Leitern 25, 25' des Anschlußkabels verbunden, dessen Enden an Anschlußstecker 15, 15' angeschlossen sind. Das Gehäuse 4 ist über Leitung 19, die beispielsweise als auf Massepotential liegender Metallmantel ausgebildet ist, mit dem Minuspotential der Gleichspannungsquelle 18 verbunden, wobei die negative Vorspannung des Gehäuses 4 der Bildung eines Lokalelementes im Inneren des Gehäuses entgegenwirkt. Im Widerstandsmeßkreis ist weiterhin ein temperaturunabhängiger Abgleichwiderstand 20 bzw. ein temperaturunabhängiges Potentiometer in Reihe zu Meßwiderstand 1 geschaltet; die Anzeige der von Meßwiderstand 1 ermittelten Temperaturt erfolgt über ein zu Widerstand 1 parallel geschaltetes Voltmeter 21.

Anhand des in Figur 3 dargestellten Querschnitts des Anschlußkabels 13 ist erkennbar, daß parallel zu den Leitern 25, 25' ein Glas-Seiden-Beilauf 16, 16' vorgesehen ist, welcher aufgrund seiner Sauerstoff-Permeabilität und der im Querschnitt ersichtlichen Zwischenräume einen Sauerstoffzutritt über Verbindungsbereich 26 im Schutzrohr 7 und in das rohrförmige Widerstands-Gehäuse 4 gemäß Figur 1 und 2 ermöglicht. Die Verbindung des Gehäuses 4 mit dem negativen Pol der Spannungsquelle 18 kann beispielsweise über eine metallische Abschirmung bzw. Umhüllung als Leitung 19 erfolgen, die die gegeneinander elektrisch isolierten Leiter 25, 25' elektrisch isolierend umgibt, sie kann aber auch durch die Maschinenmasse, die sowohl mit dem Minuspol der Spannungsquelle als auch über die Verschraubung 8 auf das Gehäuse 4 gelang!, gegeben sein.

## Patentansprüche

1. Temperatur-Sensor mit einem Platin enthaltenden temperaturabhängigen Meßwiderstand, dessen Oberfläche gegenüber der Umgebungsatmosphäre durch eine sauerstoffdurchlässige Diffusionsbarriere abgedeckt ist, wobei der Meßwiderstand über wenigstens ein Kontaktfeld mit wenigstens einer Anschlußleitung verbunden ist, dadurch gekennzeichnet, daß der Meßwiderstand (1) in einem gas- und flüssigkeitsdichten Gehäuse (4) über eine in einem Schutzrohr (7) geführte Leitung (6, 6') mit einem Ende eines Anschlußkabels verbunden ist, wobei zwischen Anschlußkabel (13) und Gehäuse eine mechanisch feste und flüssigkeitsdichte Verbindung vorgesehen ist, die einen Zutritt von Luftsauerstoff aus der Umgebung des Anschlußkabels in das Gehäuse (4) ermöglicht).

2. Temperatur-Sensor nach Anspruch 1, dadurch gekennzeichnet, daß der Anschlußbereich des Gehäuses mittels wenigstens zweier Rollsicken auf das Ende des Anschlußkabels aufgequetscht ist.

3. Temperatur-Sensor nach Anspruch 1 oder 2, dadurch gekennzeichnet, daß der Zutritt von Luft-Sauerstoff wenigstens über das dem Gehäuse (4) abgewandte Ende des Anschlußkabels erfolgt.

4. Temperatur-Sensor nach Anspruch 3, dadurch gekennzeichnet, daß der Zutritt von Luft-Sauerstoff über einen Anschlußstecker erfolgt.

5. Temperatur-Sensor nach Anspruch 3 oder 4, dadurch gekennzeichnet, daß der Zutritt von Luft-Sauerstoff in Längsrichtung des Anschlußkabels entlang eines parallel zu den elektrischen Leitungen geführten Glas-Seiden-Beilaufs innerhalb der Ummantelung erfolgt.

6. Temperatur-Sensor nach einem der Ansprüche 1 bis 5, dadurch gekennzeichnet, daß das Anschlußkabel eine flüssigkeitsdichte sauerstoffpermeable Ummantelung aufweist, durch die ein Zutritt von Luftsauerstoff in das Gehäuse (4) erfolgt.

7. Temperatur-Sensor nach Anspruch 6, dadurch gekennzeichnet, daß die Ummantelung aus Silikon besteht und eine Dicke im Bereich von 1 mm bis 6 mm aufweist.

8. Temperatur-Sensor nach einem der Ansprüche 1 bis 7, dadurch gekennzeichnet, daß die Sauerstoffpermeabilität, sowohl in Längsrichtung des Kabels mit Stecker als auch durch Querpermeabilität durch die Ummantelung des Anschlußkabels wenigstens 0,05 mbar l/sec beträgt.
